# EUROPEAN PATENT APPLICATION

(11) **EP 3 502 489 A1**
(43) Date of publication of application: **26.06.2019**
(21) Application number: 18209117.3
(22) Date of filing: 29.11.2018
(51) Int. Cl.: F16B 5/00, F16B 5/01, F16B 5/02

(54) **PANEL ARRANGEMENT**

(30) Priority: 21.12.2017 GB 201721549
(71) Applicant: Rolls-Royce plc, London SW1E 6AT (GB)
(72) Inventor: Gower, Edward, Derby, Derbyshire DE24 8BJ (GB); Groom, Alec, Derby, Derbyshire DE24 8BJ (GB)
(74) Representative: Rolls-Royce plc

(57) **Abstract**

A panel arrangement comprising a first panel (30), comprising a first connector (38) permanently bonded to an end edge thereof; and, a second panel (50), comprising a second connector (58) permanently bonded to an end edge thereof; wherein the first and second panel are in end-on abutment via the first connector and second connector, and wherein the first and second connectors are fastened together by a fastener (41).

## Description

### TECHNICAL FIELD

The present disclosure concerns a panel arrangement. In particular, the present disclosure concerns a panel arrangement for the fastening of two or more composite panels.

### TECHNICAL BACKGROUND

Composite sandwich panels typically include a lightweight honeycomb core, which is typically comprised of one or more of a glass composite, aluminium or titanium sheet. The sheet is typically encased between a first skin and a second skin, which are commonly comprised of laminate carbon fibre reinforced plastic (CFRP) or glass fibre reinforced plastic (GFRP) sheet. This arrangement is used to achieve as high a second moment of area as possible. This maximises the bending stiffness of the structure whilst maintaining a low structural mass. This helps ensure a minimal weight penalty to a wider component or system in which the composite sandwich panel is used. Such systems may include, for example, a gas turbine engine or an airframe for an aircraft.

Composite sandwich panels perform well when the component is manufactured as one continuous piece. However, the need to join the panels, typically via the use of mechanical fasteners, can result in numerous design challenges. The point-load effect of fasteners may result in a significant risk of fastener pull-through, where fasteners are pulled through the structure under an applied load. Furthermore, under high load conditions, the skins may be exposed to large through-thickness strain and hence inter-laminar shear. In the case of a CFRP laminate, such through-thickness strain and inter-laminar shear may result in high skin stress, leading to premature panel failure. For the previously described reasons at least, sandwich panels are not commonly joined or assembled together when used in structural aerospace applications. Instead, sandwich panels are typically manufactured as a single continuous component or piece (e.g. a helicopter blade), or permanently bonded using a secondary bonding process following curing or component manufacture.

In some applications, it is not appropriate to manufacture two or more sandwich panels as a single component, or permanently bond one component to another. This may be the case where, for example, periodic disassembly is required for maintenance or inspection access. In particular, secondary bonding processes (i.e. post-cure bonding) may provide a stiff bond, but are not currently permitted for primary structural joints in aerospace applications. Also, use of secondary bonding processes makes disassembly a destructive process.

Should a need arise for two or more sandwich panel structures to be joined or assembled together, it is common for manufacturers to overlap and join the respective structres using a lap joint. When using such a joint, for example, two pieces of monolithic CFRP are overlapped and pinned, so that a first or second skin of a first panel at least partially covers a first or second skin of a second panel. Due technical difficulties in achieving tight tolerances during either or both of manufacture or assembly, along with the overlapping arrangment of the lap joint providing a potential for leakage to occur (at least), lap joints may provide insufficient gas-sealing, and so may not be suitable for applications requiring the containment of, for example, a high-pressure fluid. Furthermore, lap joints may be suitable for use in applications where the joined panels are exposed to tensile loads, but may not be suitable for use in a bending moment load-carrying capacity. As a further design consideration, bimetallic corrosion between one or more of the honeycomb sheet, the first sheet, the second sheet, and a steel lap-joint pin, may increase the degree of inspection required, and so may limit the use of this arrangement.

WO2014/175795 discloses a method for the manufacture of a torsion-box type skin composite structure mountable to a main sub-structure, the torsion-box type skin composite structure comprises a skin component, a stiffener element, a fastener element for bonding the torsion-box type skin composite structure to the main sub-structure. However, WO2014/175795 discloses a series of lap-joints in shear, the joints of which do not enable good gas sealing properties.

US3463526 discloses a weldable attachment that enables heat sensitive honeycomb sandwich panels to be joined together without damage to their adhesive bonded surfaces. The internally cored attachment is mechanically fastened to the honeycomb sandwich panel through thin protruding flanges that have a greater resistance to heat flow from the weld on the attachment than the thicker ribs and cooling fins surrounding the internal core. However, US3463526 discloses a series of lap-joints in shear, the joints of which do not enable good gas sealing properties, whilst providing a permanent weld between the panels.

Thus, it would be advantageous to provide a panel arrangement for the fastening of two or more composite panels, which does not suffer from the aforementioned disadvantages.

### STATEMENTS

According to a first aspect, there is provided a panel arrangement. The panel arrangement may comprise a first panel. The first panel may comprise a first connector permanently bonded to an end edge thereof. The arrangement may comprise a second panel. The second panel may comprise a second connector permanently bonded to an end edge thereof. The first and second panel may be in end-on abutment via the first connector and second connector. The first and second connectors may be fastened together by a fastener.

The panel arrangement may provide a releasable connection between the first and second connector. Thus, the panel arrangement may provide a releasable joint between the first panel and the second panel. The releasable joint may be of significant strength. Thus, the panel arrangement may allow repeated assembly and disassembly of a structure using an arrangement which is both strong and lightweight, whilst ensuring enhanced aerodynamic performance and joint integrity over previously known panel arrangements. Advantageously, such an end-on joint may be more aerodynamically efficient than previously known panel arrangements. Furthermore, the end-on abutment of the first panel and the second panel may provide a reduced potential for leakage to occur. Thus, end-on abutment may provide improved gas sealing properties.

The first connector may be permanently bonded to the first panel to provide an integral structure. In some examples, the first connector may be permanently bonded to the first panel during manufacture of the first panel to provide an integral structure. Additionally or alternatively, the second connector may be permanently bonded to the second panel to provide an integral structure. In some examples, the second connector may be permanently bonded to the second panel during manufacture of the second panel to provide an integral structure.

Additionally or alternatively, at least a portion of the first connector may be permanently bonded to the first panel during the curing of the first panel. In further examples, at least a portion of the first connector may be permanently secured to the first panel following the manufacture of the first panel. Additionally or alternatively, at least a portion of the second connector may be permanently bonded to the second panel during the curing of the second panel. In further examples, at least a portion of the second connector may be permanently secured to the second panel following the manufacture of the second panel. Thus, the first panel may be co-cured to the first connector. Additionally or alternatively, the second panel may be co-cured to the second connector.

Both of the first and second connectors may comprise an abutment surface which abuts the corresponding abutment surface of the other of the first or second connector. The abutment of the first and second connector may provide a matable connection surface. Thus, the abutment surface of the first and second panel may be cooperatively shaped to ensure that the respective panels abut against one another during releasable connection. In some examples, the respective abutment surfaces may be substantially planar. Thus, the first and second panels may abut against one another in substantially the same plane when fastened together by the fastener. Such fastening may be a releasable connection. In further examples, the respective abutment surfaces may not be substantially planar, but the abutment surfaces of the first and second connectors may be commensurate or cooperative with one another. Thus, the first and second panels may abut against one another in two or more planes during releasable connection. Advantageously, this may provide a large contact area and reaction surface between the respective panels.

The abutment surface of the first panel and the second panel may extend along a longitudinal axis of either or both of the first panel and the second panel. The longitudinal axis may refer to a direction along a width of either or both of the first panel and the second panel. Thus, the exterior-facing surfaces of the first panel and the second panel may be in at least substantially the same plane. In this way, the panel arrangement may provide a joint, between the first panel and the second panel, of reduced overall thickness relative to similar joints known within the art.

Due to end-on abutment of the first connector and second connector, the first panel and the second panel do not overlap in an equivalent manner to that of a lap-joint. Advantageously, such an arrangement forms a joint that does not induce significant bending moment resulting in fastener pull-out or pull-through, which could damage either or both of the respective panels.

The fastener may extend through the first and second connectors. Additionally or alternatively, the fastener may clamp the first and second connectors together. The first connector of the first panel and the second connector of the second panel may be releasably connected by one or more fasteners. The fastener may be comprised of two or more separable components. The fastener may comprise a metallic fastening component. The fastener may comprise either or both of a nut and a bolt. One or more of the fasteners may comprise a bolt. One or more of the fasteners may comprise a nut. One or more of the fasteners may comprise a captive nut. One or more of the fasteners may comprise a threaded portion. One or more of the fasteners may comprise a quick release linkage or mechanism, or a hinge, catch, or stepped feature. Additionally or alternatively, the fastener may comprise a clamp. The fastener may comprise a first mating surface, which abuts against a second mating surface to provide a releasable connection. The second mating surface may be comprised within the first connector or the second connector. The second mating surface may be permanently integrated within the first connector or the second connector. The second mating surface may be releasably integrated within the first connector or the second connector. Either or both of the first connector or second connector may be shaped for integration, fixation or location of either or both of one or more components of the fastener.

Either or both of the first and second connector may comprise a through-hole through which the fastener may pass. The fastener may extend through the first abutment surface of the first connector and the first abutment surface of the second connector. Thus, the fastener may be located, in use, either or both of in and between the first connector of the first panel and the second connector of the second panel. Thus, the fastener may act to provide releasable connection during abutment of the first connector and the second connector. Thus, the fastener may provide releasable connection of the first panel and the second panel.

The fastener may comprise an elongate member having a longitudinal axis, wherein the longitudinal axis extends in-line with the first and second panels. The first and second panels may be co-planar on a first side. The first and second panels may be co-planar on a second side. By co-planar, it is meant that either or both of the first side and the second side of the first and second panels, during releasable connection, comprise a flush outer surface. Thus, during releasable connection, either or both of the first side and the second side may comprise a substantially linear surface across the joint between the first and second panels. Accordingly, the longitudinal axis of the fastener may be either or both of located and orientated parallel to loads exerted in the first and second panel. Thus, the longitudinal axis of the fastener may be either or both of located and orientated parallel to axial loads exerted in a longitudinal direction of the first and second panel.

Either or both of the first and second panels may be sandwich panels. Either or both of the first sandwich panel and second sandwich panel may comprise a first skin, a second skin, and a core extending therebetween. Thus, the core of either or both of the first or second panel may comprise a cellular core. The core of either or both of the first or second panel may comprise a honeycomb core. Either or both of the honeycomb or cellular structure may be columnar. Either or both of the honeycomb or cellular structure may be hexagonal in shape. Additionally or alternatively, the core of either or both of the first or second panels may comprise a girder structure. The core of either or both of the first or second panels may comprise an I-beam structure. The core of either or both of the first or second panel may comprise one or more reinforcing members. The core of either or both of the first or second panel may comprise a single convoluted or contorted member. The core of either or both of the first or second panel may comprise a warren girder structure.

Either or both of the first skin or second skin of the first or second panel may comprise a composite material. Either or both of the first skin or second skin of the first or second panel may comprise a carbon fibre reinforced plastic (CFRP). Either or both of the first or second skin of the first or second panel may comprise a glass fibre reinforced plastic (GFRP). Either or both of the first or second skin of the first or second panel may comprise a further composite material known within the art. Any of the above-mentioned materials may be a single-layer or laminate structure.

Either or both of the first skin or second skin of the first panel or second panel may comprise a metallic material. Either or both of the first or second skin of the first or second panel may comprise aluminium. Either or both of the first or second skin of the first or second panel may comprise an aluminium alloy. Either or both of the first or second skin of the first or second panel may comprise titanium. Either or both of the first or second skin of the first or second panel may comprise a titanium alloy. Either or both of the first or second skin of the first or second panel may comprise a further metal or alloy known within the art. Any of the above-mentioned materials may be a single-layer or laminate structure. Either or both of the first or second skin of the first or second panel may comprise, in addition to the metallic material, a GFRP. Either or both of the first or second skin of the first or second panel may comprise, in addition to the metallic material, a CFRP. Either or both of the first or second skin of the first or second panel may comprise, in addition to the metallic material, a further composite material known within the art. Any of the above-mentioned materials may be a single-layer or laminate structure such as glass reinforced aluminum (GLARE). Such laminate structures may comprise several layers of a metal interspersed with layers of a composite. Such layers may be bonded with a matrix, such as epoxy. Uni-directional pre-pregnated layers may be aligned in different directions to suit predicted stress conditions.

Either or both of the first and second connector may comprise a receiving portion in which the respective first and second panel may be received and permanently bonded. The receiving portion of the first and second connector may comprise a socket in which the panel is located. The socket may comprise opposing sidewalls between which the panel is located. In this way, at least a portion of the end edge of the first panel may locate within, and abut against an interior surface of the receiving portion of the first connector. Additionally or alternatively, at least a portion of the end edge of the second panel may locate within, and abut against an interior surface of the receiving portion of the second connector. In some examples, the end edge of either or both of the first and second panel may abut against the interior surface of the respective receiving portion, over the longitudinal axis of the respective panel.

The first and second connectors may be fastened together by a plurality of fasteners. The fasteners may be distributed along the first and second connectors. The plurality of fasteners may be distributed along a longitudinal axis of both the first and second connectors. In this way, the first connector and second connector may be connected by two or more fasteners. It will be appreciated that the particular number of fasteners required may depend on, for example, the shape, size, operational stress or expected loading of the panel arrangement, first panel or second panel. One or more fasteners may be evenly spaced along a longitudinal axis of both the first and second connectors. Additionally or alternatively, one or more fasteners may be disparately spaced along a longitudinal axis of both the first and second connectors.

Either or both of the first and second panel may comprise one or more cavities on a panel side of the abutment surface. The cavity may comprise a portion of the fastener therein. In some examples, the end edge of either or both of the first and second panels may comprise one or more cavities in the end edge of the respective panels. In some examples, the one or more cavities may be provided via one or more recesses in the end edge of the respective panels. Each of the one of more cavities or recesses may be suitably sized for insertion, location and fastening of one or more fasteners. One or more cavities or recesses may be evenly spaced along a longitudinal axis of both the first and second connectors. Additionally or alternatively, one or more cavities or recesses may be disparately spaced along a longitudinal axis of both the first and second connectors.

Either or both of the connectors may comprise an access aperture. The access aperture may extend from an exterior of the connector into the cavity to provide access to the portion of the fastener. The access apertures may be sized to allow either or both of insertion and removal of the fastener. Either or both of the access apertures may be sized to allow either or both of fastening and unfastening of the fastener. In this way, one or more of the fasteners may be accessible via at least one access aperture in either or both of the first connector and the second connector. One or more access apertures may be evenly spaced along a longitudinal axis of both the first and second connectors. Additionally or alternatively, one or more apertures may be disparately spaced along a longitudinal axis of both the first and second connectors. One or more of the access apertures of the first or second connector may be circular. One or more of the access apertures of the first or second connector may be an ellipse.

Either or both of the first and second panel may comprise a plurality of cavities. Thus, the or each access aperture in either or both of the first connector and the second connector may be coincident with a respective cavity in the first connector or second connector. One or more cavities or recesses may be evenly spaced along a longitudinal axis of both the first and second panels. Additionally or alternatively, one or more cavities or recesses may be disparately spaced along a longitudinal axis of both the first and second panels. Thus, either or both of the first and second panels may abut against the interior surface of the respective receiving portions at two or more locations. The two or more locations may be spaced along the longitudinal axis of the respective panels by the one or more cavities or recesses.

Each of the plurality of cavities may be separated from an adjacent cavity by a partitioning wall. The partitioning wall may be provided by the respective panel. Additionally or alternatively, the partitioning wall may be provided by the respective connector. Additionally or alternatively, each respective cavity in the first connector or second connector may be separated by one or more partitioning walls, webs, or structural members, or by the respective panels. The one or more partitioning walls, webs, or structural members of the first connector or second connector may act to structurally strengthen the respective connector in which they are configured. The one or more cavities may provide an open flange. Additionally or alternatively, the one or more openings may provide a cut-out spacing within a flange. Further alternatively, the one or more cavities may provide an open box section. Additionally or alternatively, the one or more openings may provide a cut-out spacing within an open box section. It will be appreciated that the openings may be provided in a number of configurations and sizes to suit, for example, the number, location, or size of the fasteners, and the respective cavities or holes.

The abutment surface may be spaced from the receiving portion and may be connected thereto by a wall which extends therebetween. Thus, the respective abutment surfaces may be spaced from the panels by one or more walls. In this way, access to the fastener is improved, whilst retaining a continuous bond between the respective panels and the receiving portion. It will be appreciated that the respective abutment surfaces may be spaced from the panels by one wall. The respective abutment surfaces may be spaced from the panels by two walls. The respective abutment surfaces may be spaced from the panels by three walls. The respective abutment surfaces may be spaced from the panels by four walls.

According to a second aspect, there is provided a method of joining a first panel and a second panel using the panel arrangement claimed in any preceding claim.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### SPECIFIC DESCRIPTION

Embodiments will now be described by way of example only, with reference to the Figures, in which:
**Figure 1** is a sectional side view of a gas turbine engine known within the art;
**Figure 2** is a sectional isometric projection of a panel arrangement;
**Figure 3** is a partially transparent sectional isometric projection of a further panel arrangement; and,
**Figure 4** is a flow chart is shown for the connection of the first panel and the second panel; according to examples pertaining to the present invention.

### DETAILED DESCRIPTION

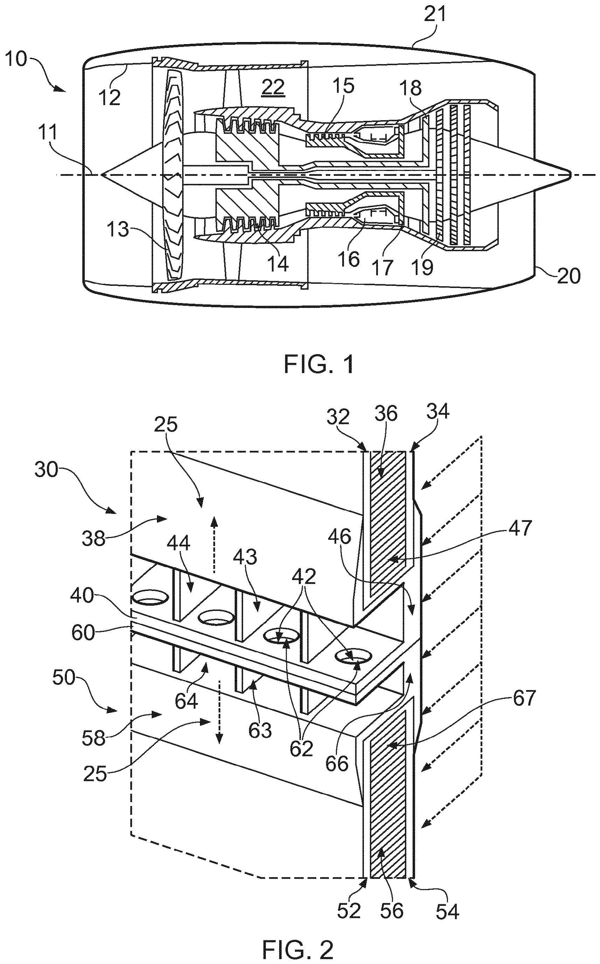

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

As used herein, the terms "radial" or "radially" refer to a dimension extending between a center longitudinal axis of the engine and an outer engine circumference. The terms "axial" or "axially" refer to a dimension along a longitudinal axis of an engine. The term "aft" used in conjunction with "axial" or "axially" refers to moving in a direction toward the engine outlet, or a component being relatively closer to the engine outlet as compared to the engine inlet. The term "forward" used in conjunction with "axial" or "axially" refers to moving in a direction toward the engine inlet, or a component being relatively closer to the engine inlet as compared to another component..

Figure 2 shows a sectional isometric projection of a panel arrangement according to some examples. The panel arrangement may be used in fastening together a first panel 30 and a second panel 50 used in a structure for use within the gas turbine engine 10 shown in Figure 1. As used herein, in relation to either or both of the first panel 30 and the second panel 50, the term "longitudinal" or "longitudinally" refers to a direction along a longitudinal axis of either or both of the first panel 30 and the second panel 50; or the first connection member 38 and the second connection member 58. The longitudinal axis therefore refers to the width of either or both of the first panel 30 and the second panel 50; or the first connection member 38 and the second connection member 58. Referring again to Figure 2, the first panel 30 and second panel 50 are shown to extend along a lengthwise direction 25 relative to the panels 30,50 themselves. The lengthwise direction 25 is perpendicular to the longitudinal direction, along which the first panel 30 and second panel abut.

The first panel 30 comprises a first skin 32, a second skin 34 and a core 36. The second panel comprises a first skin 52, a second skin 54 and a core 56. The core 36 of the first panel 30 is shown to be configured between the first skin 32 and the second skin 34 of the first panel 30. The core 56 of the second panel 50 is shown to be configured between the first skin 52 and the second skin 54 of the second panel 50. In some examples, either or both of the cores 36,56 comprise a honeycomb core. The honeycomb core comprises a columnar cellular structure extending between the first skin 32 and the second skin 34 of the first panel 30, and between the first skin 52 and the second skin 54 of the second panel 50. It will be appreciated that the cores 36,56 may comprise an I-beam structure, or one or more reinforcing members. Furthermore, in some examples, the core of either or both of the first panel 30 or second panel 50 may comprise a single convoluted or contorted member. In all cases, the respective core structures 36,56 extend between the first skin 32 and the second skin 34 of the first panel 30, and between the first skin 52 and the second skin 54 of the second panel 50. In some examples, the respective core structures 36,56 are permanently bonded to the first skin 32 and the second skin 34 of the first panel 30, and to the first skin 52 and the second skin 54 of the second panel 50. In some examples, a first fist face of the first core structure 36 is permanently bonded to the first skin 32 and a second face of the respective core structure is permanently bonded to the second skin 34 of the first panel 30. In some examples, a first fist face of the second core structure 56 is permanently bonded to the first skin 52 and a second face of the respective core structure 56 is permanently bonded to the second skin 54 of the first panel 50.

Further to the first skin 32, second skin 34 and core 36 of the first panel 30, and the first skin 52, second skin 54 and core 56 of the second panel 50, the first panel 30 is shown to comprise a first connector 38 at an end edge thereof. The end edge may be a terminal end of the first panel 30. The first connector 38 comprises a first abutment surface 40, a plurality of through-holes 42 for the location of a fastener, and a series of partitions, webs, or structural members 43 for the structural strengthening of the first connector 38. The first connector 38 comprises a plurality of cavities 44, each of the cavities 44 being separated from an adjacent cavity 44 by a partitioning wall 43. In addition, the first connector 38 comprises a first receiving portion 47 in which the first panel is received and permanently bonded. In one example, the receiving portion of the first connector 38 comprises a socket in which the first panel 30 is located. In a preferred example, the socket comprises opposing sidewalls between which the first panel 30 is one or more of is received, located and permanently bonded.

The first abutment surface 40 may be spaced from the receiving portion and connected thereto by a wall 46 which extends therebetween. In this way, the arrangement may comprise an open box section between the first abutment surface 40 and the receiving portion. In some examples, the first abutment surface 40 is spaced from the respective receiving portion and connected thereto by a wall 46 which extends therebetween. Thus, the first connector 38 may comprise at least one closed face 46. It will be appreciated that the at least one closed face 46 may add structural rigidity and strength to the first connector 38. Additionally or alternatively, the first connector 38 may comprise at least one open face. The at least one open face may allow access to one or more of the through-holes 42 for one or more of the location, fitment, fastening and unfastening of the fastener. In further examples, all faces may be open.

Further to the first skin 32, second skin 34 and core 36 of the first panel 30, and the first skin 52, second skin 54 and core 56 of the second panel 50, the second panel 50 is shown to comprise a second connector 58 at an end edge thereof. The end edge may be a terminal end of the second panel 50. The second connector 58 comprises a second abutment surface 60, a plurality of through-holes 62 for the location of a fastener, and a series of partitions, webs, or structural members 63 for the structural strengthening of the second connector 58. The second connector 38 comprises a plurality of cavities 64, each of the cavities 64 being separated from an adjacent cavity 64 by a partitioning wall 63. In addition, the second connector 58 comprises a second receiving portion 67 in which the second panel is received and permanently bonded. In one example, the receiving portion of the second connector 58 comprises a socket in which the second panel 50 is located. In a preferred example, the socket comprises opposing sidewalls between which the second panel 50 is one or more of is received, located and permanently bonded.

The second abutment surface 60 may be spaced from the receiving portion and connected thereto by a wall 66 which extends therebetween. In this way, the arrangement may comprise an open box section between the second abutment surface 60 and the receiving portion. In some examples, the second abutment surface 60 is spaced from the respective receiving portion and connected thereto by a wall 66 which extends therebetween. Thus, the second connector 58 may comprise at least one closed face 66. It will be appreciated that the at least one closed face 66 may add structural rigidity and strength to the second connector 58. Additionally or alternatively, the second connector 58 may comprise at least one open face 64. The at least one open face 64 may allow access to one or more of the through-holes 62 for one or more of the location, fitment, fastening and unfastening of the fastener. In further examples, all faces may be open.

According to some examples, in applications where the first panel 30 and the second panel 50 are used at higher temperatures, or in applications where thermal expansion is deemed likely, the cores 36,56 may be manufactured from the same materials as the respective connectors 38, 58. Such use of materials may provide a similar thermal expansion of the components over a given temperature range. According to some examples, both of the first panel 30 and the second panel 50 are between 10 and 100mm thick. According to further examples, either or both of the first panel 30 and the second panel 50 may be between 15 and 75mm thick. According to yet further examples, either or both of the first panel 30 and the second panel 50 may be between 20 and 50mm thick. In some examples, the panels may vary in either or both of thickness and materials. In further examples, the panels may be equivalent in either or both of thickness and materials.

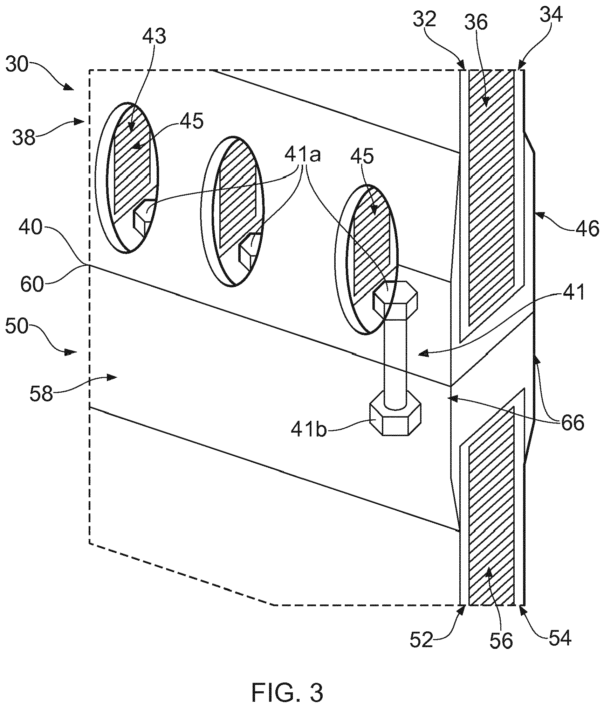

Figure 3 shows a partially transparent sectional isometric projection of a panel arrangement according to some examples. As shown in Figure 3, there is provided a first panel 30 and a second panel 50. Further to the first skin 32, second skin 34 and core 36 of the first panel 30, and the first skin 52, second skin 54 and core 56 of the second panel 50, the first panel 30 is shown to comprise a first connector 38 at an end edge thereof. The first connector 38 comprises a first abutment surface 40, one or more fasteners 41 located in through-holes 42,62 of both the first panel 30 and a second panel 50, and a series of partitions, webs, or structural members 43 for the structural strengthening of the first connector 38. As shown in Figure 2, the first connector 38 comprises a first receiving portion 47 in which the first panel 30 is received and permanently bonded. In one example, the receiving portion of the first connector 38 comprises a socket in which the first panel 30 is located. In a preferred example, the socket comprises opposing sidewalls between which the first panel 30 is one or more of is received, located and permanently bonded. According to some examples, the first connector 38 shown in both figures 2 and 3, comprises a sleeve for the encapsulation of the terminal end of the first and panel 30. Thus, in some examples, at least a portion of the first panel 30 is contained within, and is overlapped by the first connector 38. In further examples, at least a portion of the first panel 30 is bonded to the respective first connector 38.

The first connector 38 is shown to comprise at least one access aperture 45 within the otherwise closed face 46. As shown in Figure 3, each access aperture 45 is shown to be a hole or recess within a face 46 of the first connector 38. In the example shown in Figure 3, each access aperture 45 is shown to be an oval hole or recess extending through a sidewall of the first connector 38. In further examples, at least one access aperture 45 may be a square, rectangle, or any further regular or irregular polygon or shape which is sized to allow access to a fastener 41.

The fastener 41 is arranged between the first connector 38 and the second connector 58. In a preferred example, the first and second connectors 38,58 are fastened together by the fastener 41. In some examples, the fastener 41 extends through the first abutment surface 40 of the first connector 38 and the first abutment surface 60 of the second connector 58. In some examples, the fastener 41 may comprise an elongate member having a longitudinal axis. In a preferred example, the longitudinal axis extends in-line with the first 30 and second 50 panels. In further examples, each of the fasteners 41 may comprise two or more separable components, such as a bolt 41 a and a nut 41 b. In this way, one or more of the fasteners 41 may comprise a threaded portion. In further examples, one or more of the fasteners 41 may comprise a quick release linkage or mechanism, or a hinge, catch or stepped feature. In all cases, the fastener 41 comprises a first mating surface, which abuts against a second mating surface to provide a fastening of the first panel 30 and the second panel 50.

Although not shown, the fastener arrangement shown and described in relation to Figure 3 may also be used in the arrangement of Figure 2. The arrangement allows the or each fastener 41 to fasten together the first connector 38 and the second connector 58. Through the longitudinal axis of the fastener 41 extending in-line with the first 30 and second 50 panels, the arrangement may enable tensile loads or bending moments endured by the first panel 30 and the second panel 50 to be efficiently absorbed by the or each fastener 41, according to requirements.

The or each access aperture 45 allows access to one or more of the through-holes 42 for the location and fitment of the fastener 41. The first connector 38 is also shown to comprise at least one closed face 46. It will be appreciated that the provision of at least one closed face 46 may add structural rigidity and strength to the first connector 38. In some examples however, all faces may be open. In further examples however, all faces may be closed.

Further to the first skin 32, second skin 34 and core 36 of the first panel 30, and the first skin 52, second skin 54 and core 56 of the second panel 50, the second panel 50 is shown to comprise a second connector 58 at an end edge thereof. As shown in figure 2, the second connector 58 comprises a second abutment surface 60, a plurality of through-holes 62 for the location of a fastener 41, and a series of partitions, webs, or structural members 63 for the structural strengthening of the second connector 58. The second connector 58 is also shown to comprise at least one closed face 66. It will be appreciated that the provision of at least one closed face 66 may add structural rigidity and strength to the second connector 58. As shown in Figure 2, the second connector 58 comprises a second receiving portion 67 in which the second panel 50 is received and permanently bonded. In one example, the receiving portion of the second connector 67 comprises a socket in which the second panel 30 is located. In a preferred example, the socket comprises opposing sidewalls between which the second panel 50 is one or more of is received, located and permanently bonded. According to some examples, the second connector 58, shown in both figures 2 and 3, comprises a sleeve for the encapsulation of the terminal end of the second panel 40. Thus, in some examples, at least a portion of the second panel 40 is contained within, and is overlapped by the second connector 58. In further examples, at least a portion of the second panel 40 is bonded to the second connector 58.

The second connector 58 is shown to comprise at least one closed face 66. In a further example, the second connector 58 may comprise one or more access apertures 45 within one or more closed faces 66. In yet further examples, each access aperture 45 may be a hole or recess within a face 46 of the second connector 58. Each access aperture 45 may be an oval hole or recess extending through a sidewall of the second connector 58. In further examples, at least one access aperture 45 may be a square, rectangle, or any further regular or irregular polygon or shape which is sized to allow access to the fastener 41.

In a preferred example, to allow one or more fasteners 41 to fasten the first panel 30 and the second panel 50 together, one or more through-holes 42 of the first connector 38 and one or more through-holes 42 of the second connector 58 are coaxial relative to one another when the first and second panels 30,50 are in end-on abutment. In this way, the fastener 41 may extend through the first abutment surface 40 of the first connector 38 and the first abutment surface 60 of the second connector 58. Thus, the first and second panels 30,50 may be co-planar on a first side. Furthermore, the first and second panels 30,50 may be co-planar on a second side. It will be appreciated that the term co-planar means that either or both of the first side and the second side of the first and second panels, during releasable connection, comprise a flush outer surface.

In further examples, at least a portion of the first connector 38 may be permanently secured to the first panel 30 during the manufacture of the first panel 30. In further examples, at least a portion of the first connector 38 may be permanently secured to the first panel 30 following the manufacture of the first panel. In this way, the first connector 38 may be co-cured to the first panel 30 during manufacture of the component. By co-curing, it will be understood that the connector 38,58 is permanently secured to the panel 30,50, during the curing process of the or each respective panel. This ensures a strong bond between the first connector 38 and the first panel 30.

Additionally or alternatively, east a portion of the second connector 58 may be permanently secured to the second panel 50 during the manufacture of the second panel 50. In further examples, at least a portion of the second connector 58 may be permanently secured to the second panel 50 following the manufacture of the second panel. In this way, the second connector 58 may be co-cured to the second panel 50 during manufacture of the component. This ensures a strong bond between the second connector 58 and the second panel 50.

In some examples, the arrangements shown in either of Figures 2 or 3 may comprise one or more of a single first abutment surface 40, a single through-hole 42 for the location of a fastener 41, and a single partition or web 43 for the structural strengthening of the first connector 38. In further examples, the arrangement may comprise one or more of a plurality of first abutment surfaces 40, a plurality of through-holes 42 for the location of two or more fasteners 41, or a plurality of partitions, webs, or structural members 43.

In some examples, the arrangements shown in either of Figures 2 or 3 may comprise one or more of a single second abutment surface 60, a single hole 62 for the location of a fastener 41, and a single partition or web 63 for the structural strengthening of the second connector 58. In further examples, the arrangement may comprise one or more of a plurality of second abutment surfaces 60, a plurality of through-holes 62 for the location of two or more fasteners 41, or a plurality of partitions, webs, or structural members 63.

In yet further examples, either or both of the first connector 38 and the second connector 58, shown or described in either of Figures 2 or 3, may comprise one or more nuts, bolts, integrated fasteners 41, captive nuts, or blind bolts, or any combination of the same. Such an arrangement may mean that some or all of the faces of the first connector 38 may be closed. Additionally or alternatively, an integrated fastener 41 or blind bolt arrangement may mean that some or all of the faces of the second connector 58 may be closed.

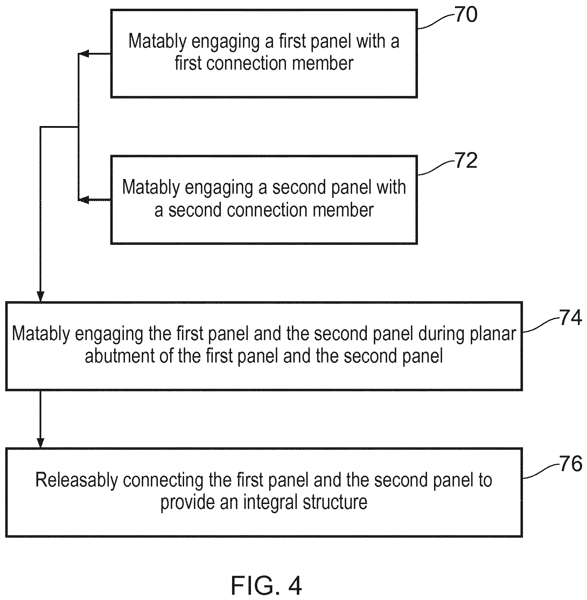

Referring now to Figure 4, a method is shown for the releasable connection of the first panel 30 and the second panel 50.

As shown in block 70, the method includes steps to matably engage a first panel 30 with a first connector 38. Thus, in step 70, a first panel 30 is connected to a first connector 38. In a preferred example, at least a portion of the first connector 38 may be permanently secured to the first panel 30. In some examples, at least a portion of the first connector 38 may be permanently secured to the first panel 30 during the manufacture of the first panel 30. In further examples, at least a portion of the first connector 38 may be permanently secured to the first panel 30 following the manufacture of the first panel 30. In further examples, the first connector 38 and first panel 30 may be manufactured separately. Thus, the first connector 38 and first panel 30 may be assembled together following manufacture. Although it will be understood that that the described examples are not limiting, in a preferred example, the first connector 38 is co-cured to the first panel 30 during manufacture of the first assembly. Thus, the first connector 38 and first panel 30 are preferably integrated during manufacture. This ensures a strong bond between the first connector 38 and the first panel 30.

As shown in block 72, which may occur after, during, or before the step described in block 70, the method includes steps to matably engage a second panel 50 with a second connector 58. Thus, in step 70, a second panel 50 is connected to a second connector 58. In a preferred example, at least a portion of the second connector 58 may be permanently secured to the second panel 50. In some examples, at least a portion of the second connector 58 may be permanently secured to the second panel 50 during the manufacture of the second panel 50. In further examples, at least a portion of the second connector 58 may be permanently secured to the second panel 50 following the manufacture of the second panel 50. In further examples, the second connector 58 and second panel 50 may be manufactured separately. Thus, the second connector 58 and second panel 50 may be assembled together following manufacture. Although it will be understood that that the described examples are not limiting, in a preferred example, the second connector 58 is co-cured to the second panel 50 during manufacture of the second assembly. Thus, the second connector 58 and second panel 50 are preferably integrated during manufacture. This ensures a strong bond between the second connector 58 and the second panel 50.

As shown in block 74, the method includes steps to matably engage the first panel and the second panel during end-on abutment of the first panel and the second panel. In completion of this step, relative movement of the combined first panel 30 and first connector 38 and the combined second panel 50 and second connector 58 may bring the first assembly and second assembly into end-on abutment. In a preferred arrangement, the first connector 38 comprises a first abutment surface 40 and a plurality of through-holes 42 for the location of a fastener 41. In further examples, the first connector 38 may comprise a first abutment surface 40 and a single through-hole 42 for the location of a fastener 41. Furthermore, the second connector 58 may comprise a second abutment surface 60 and a plurality of through-holes 62 for the location of a fastener 41. In further examples, the second connector 38 may comprise a second abutment surface 60 and a single through-hole 62 for the location of a fastener 41.

According to examples, end-on abutment of the first connector 38 of the first panel 30 and the second connector 58 of the second panel 50 may ensure that the respective panels 30,50 are aligned in substantially the same plane. Such abutment may provide a substantial contact area and reaction surface between the respective panels 30,50. Furthermore, such abutment may provide that the one or more through-holes 42 of the first connector 38 and that the one or more through-holes 62 of the second connector 58 are at least partially aligned. According to further examples, one or more through-holes 42 of the first connector 38 and one or more through-holes 62 of the second connector 58 are coaxial. Thus, in some examples, the first 30 and second 50 panels are co-planar on a first side. In further examples, the first 30 and second 50 panels are co-planar on a second side.

As shown in block 76, the method includes steps to fasten the first panel 30 and the second panel 50 to provide an integral structure. According to a preferred example, one or more fasteners 41 are located within one or more through-holes 42 of the first connector 38 and one or more through-holes 62 of the second connector 58, wherein the one or more through-holes 42 of the first connector 38 and one or more through-holes 62 of the second connector 58 are at least partially aligned. Thus, the or each fastener 41 may pass through a corresponding through-hole 42 of the first connector 38 and a corresponding through-hole 62 of the second connector 58. In a preferred example, the or each fastener 41 may be comprised of two or more separable components. According to further examples, the or each fastener 41 may comprise a metallic fastening component. One or more of the fasteners 41 may comprise a bolt. One or more of the fasteners 41 may comprise a nut. One or more of the fasteners 41 may comprise a threaded portion. Thus, in a preferred example, the fastener 41 comprises a first mating surface, which abuts against a second mating surface to provide a connection. In this way, the or each fastener 41 may be inserted and fastened, or unfastened and removed, to provide a releasable connection.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A panel arrangement comprising:
a first panel (30) comprising a first connector (38) permanently bonded to an end edge thereof; and,
a second panel (50) comprising a second connector (58) permanently bonded to an end edge thereof;
wherein the first and second panel are in end-on abutment via the first connector and second connector, and wherein the first and second connectors are fastened together by a fastener (41).

2. The panel arrangement as claimed in Claim 1, wherein both of the first and second connectors comprise an abutment surface (40,60) which abuts the corresponding abutment surface of the other of the first or second connector.

3. The panel arrangement as claimed in Claim 1 or Claim 2, wherein the fastener extends through the first and second connectors.

4. The panel arrangement as claimed in any preceding Claim, wherein the fastener clamps the first and second connectors together.

5. The panel arrangement as claimed in any one of Claims 1 to 3, wherein either or both of the first and second connector comprises a through-hole (42,62) through which the fastener passes.

6. The panel arrangement as claimed in any preceding Claim, wherein the fastener comprises an elongate member having a longitudinal axis, wherein the longitudinal axis extends in-line with the first and second panels.

7. The panel arrangement as claimed in any preceding Claim, wherein the first and second panels are co-planar on either or both of a first side and a second side.

8. The panel arrangement as claimed in any preceding Claim, wherein either or both of the first and second panels are sandwich panels, comprising a first skin, a second skin, and a core extending therebetween.

9. The panel arrangement as claimed in any preceding Claim, wherein either or both of the first and second connector comprise a receiving portion in which the respective first and second panel is received and permanently bonded.

10. The panel arrangement as claimed in any preceding Claim, wherein either or both of the first and second panel comprise one or more cavities on a panel side of the abutment surface, the cavity comprising a portion of the fastener therein.

11. The panel arrangement as claimed in Claim 10, wherein either or both of the connectors comprise an access aperture which extends from an exterior of the connector into the cavity to provide access to the portion of the fastener.

12. The panel arrangement as claimed in Claims 10 or 11, further comprising a plurality of cavities, each of the plurality of cavities being separated from an adjacent cavity by a partitioning wall.

13. The panel arrangement as claimed in Claim 12, wherein the partitioning wall is provided by either or both of the respective panel and the respective connector.

14. The panel arrangement as claimed in any one of Claims 9 to 13, wherein the abutment surface is spaced from the receiving portion and connected to and supported by a wall which extends therebetween.

15. A method of joining a first panel and a second panel using the panel arrangement claimed in any preceding claim.
